# FASCICULE DE BREVET EUROPEEN

(11) **EP 1 188 370 B1**
(45) Date de publication et mention de la délivrance du brevet: **11.01.2006**
(21) Numéro de dépôt: 01440298.6
(22) Date de dépôt: 12.09.2001
(51) Int. Cl.: A01K 5/00

(54) **Machine de préparation et de distribution d'aliments pour le bétail**
Vorrichtung zur Herstellung und zur Verteilung von Viehfutter
Device for preparing and distributing cattle food

(30) Priorité: 15.09.2000 FR 0011910
(43) Date de publication de la demande: 20.03.2002
(73) Titulaire: Kuhn-Audureau S.A., 85260 La Copechagnière (FR)
(72) Inventeur: Martin, Jean-Paul, 85800 Le Fenouiller (FR); Drouet, Anthony, 85260 Saint Sulpice le Verdon (FR); Allain, Robert, 85250 La Rabateliere (FR)
(74) Mandataire: Andres, Jean-Claude

(56) Documents cités:
- EP-A- 0 943 236
- DE-U- 29 801 423
- FR-A- 2 424 208
- US-A- 3 913 794
- US-A- 4 907 538
- US-A- 5 967 427
- US-A- 5 967 657

## Description

La présente invention se rapporte à une machine de préparation et de distribution d'aliments pour le bétail, comprenant notamment un châssis, une cuve qui est montée sur ledit châssis et qui est formée par un plancher, deux parois latérales, une paroi avant et une paroi arrière définissant un volume pouvant être rempli d'aliments, au moins une trappe pour la distribution sur au moins une paroi latérale, des moyens de déchiquetage et de mixage qui se situent dans le fond de la cuve, lesquels moyens sont constitués par au moins deux vis placées côte à côte qui sont entraînées en rotation à des vitesses modulables et qui sont munies de filets ou de pales qui déplacent les aliments dans la cuve en vue d'obtenir un mélange homogène ou de les en faire sortir pour la distribution lorsqu'une trappe est ouverte.

Les machines de ce genre comportent généralement des vis qui tournent à la même vitesse pour le mixage des aliments et pour la distribution. Cette vitesse est relativement lente afin de permettre aux vis de bien saisir les aliments. Ceux-ci peuvent être constitués par du foin en vrac ou en balles, des blocs d'ensilage ainsi que d'autres produits additionnels pouvant être introduits dans la cuve par le haut. Les vis doivent alors déchiqueter ces produits et les faire tourner dans la cuve pour obtenir une structure régulière et pour homogénéiser le mélange.

Lors de la distribution les vis poussent les aliments vers l'extérieur de la cuve. Le débit obtenu est relativement lent en raison de la faible vitesse de rotation des vis. L'opération de distribution prend ainsi beaucoup de temps. De plus, les aliments peuvent être déstructurés dans la cuve par le brassage continu effectué par les vis.

Le brevet US 5 967 657 décrit une machine de distribution d'aliments qui comporte une cuve avec un rotor mélangeur. Cette cuve possède une ouverture latérale pour le déchargement devant laquelle situe un rotor distributeur. Le débit de la machine peut être augmenté ou diminué par ajustement de l'ouverture et par ajustement de la vitesse de rotation des rotors.

Le brevet US 3 913 794 se rapporte à un véhicule de distribution d'aliments sous forme de pellets dans la trace d'une de ses roues. Ce véhicule comporte une trémie dans le fond de laquelle est disposée une vis de distribution dont la vitesse de rotation peut être variée. Cette vis de distribution n'a pas comme fonction de déchiqueter et mélanger les produits dans la trémie.

La présente invention a pour but de remédier aux inconvénients précités des machines connues. Elle doit notamment permettre la réalisation d'un mélange homogène et éviter la déstructuration des aliments au cours de la distribution.

A cet effet, une importante caractéristique de l'invention consiste en ce que la machine comporte des moyens d'entraînement en rotation des vis qui assurent des vitesses de rotation des vis qui sont sensiblement égales lorsque la trappe est fermée et qui assurent une augmentation de la vitesse de rotation de la vis qui est située du même côté que la trappe ouverte et une réduction de la vitesse de rotation de l'autre vis.

Les vitesses de rotation sensiblement égales des vis permettent de parfaire le déchiquetage et le mélange des aliments. L'augmentation de la vitesse de rotation de la vis la plus proche de la trappe lors de la distribution et le ralentissement de la vitesse de rotation de l'autre vis permettent d'accélérer la sortie des aliments de la cuve et de limiter le brassage des aliments lorsque la structure recherchée est atteinte. La durée de l'opération de distribution est en sus réduite, ce qui fait gagner du temps à l'opérateur

Selon l'invention, les deux vis placées côte à côte sont entraînées en rotation par des moteurs hydrauliques alimentés depuis une pompe par l'intermédiaire d'un circuit hydraulique comprenant un diviseur de débit réglable. Ce dernier comporte deux valves permettant de faire varier le rapport de division du diviseur de débit. Celui-ci pourra passer de 50 % du débit total vers chaque moteur durant le mélange à par exemple 80 % du débit total du côté de déchargement et à 20 % de l'autre côté durant la distribution. Les deux valves peuvent avantageusement être commandées par l'ouverture et la fermeture des trappes. Ainsi, lorsqu'une trappe est ouverte, les valves du diviseur de débit provoquent une augmentation de la vitesse de rotation de la vis qui est située du même côté que ladite trappe ouverte et une réduction de la vitesse de rotation de l'autre vis.

Selon l'invention, la machine peut également comporter deux vis entraînées en rotation mécaniquement au moyen d'un boîtier avec des pignons déplaçables ou interchangeables en vue de modifier leurs vitesses de rotation.

D'autres caractéristiques et avantages de l'invention ressortiront de la description ci-après d'exemples de réalisation non limitatifs de l'invention, avec référence aux dessins annexés dans lesquels :
- la figure 1 représente une coupe longitudinale d'une machine selon l'invention ;
- la figure 2 représente une vue de dessus de cette machine ;
- la figure 3 représente un schéma des moyens d'entraînement hydrauliques de la machine durant le mixage ;
- la figure 4 représente un schéma des moyens d'entraînement hydrauliques de la machine durant la distribution.

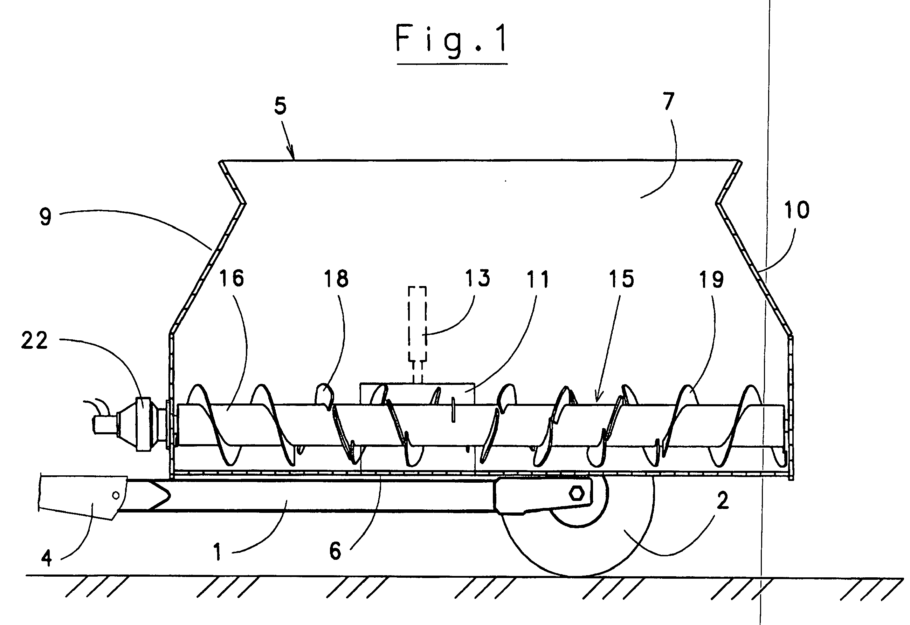

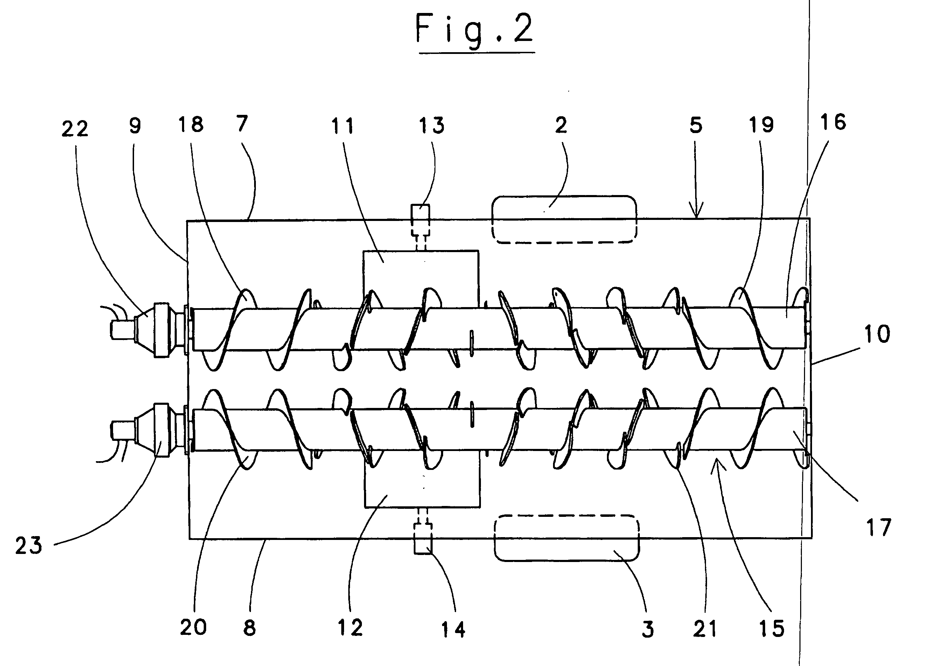

Telle qu'elle est représentée sur les figures 1 et 2, la machine selon l'invention comprend un châssis (1) muni de roues (2 et 3) et d'un timon (4) pour l'accrochage à un tracteur non représenté. La machine selon l'invention pourrait aussi être automotrice. Sur ledit châssis (1) est montée une cuve (5) formée par un plancher (6), deux parois latérales (7 et 8), une paroi avant (9) et une paroi arrière (10) définissant un volume qui peut être rempli d'aliments pour le bétail. Chaque paroi latérale (7, 8) comporte une trappe (11, 12) dans sa partie inférieure pour la sortie des aliments. L'ouverture et la fermeture de chaque trappe (11, 12) peuvent être commandées par un vérin hydraulique (13, 14).

Dans le fond de la cuve (5) sont logés des moyens de déchiquetage et de mixage (15) des aliments. Ces moyens sont constitués par deux vis (16 et 17) sensiblement horizontales. Ces vis (16 et 17) sont montées dans des paliers des parois avant et arrière (9 et 10) de manière à pouvoir tourner. Chaque vis (16 et 17) est munie de deux filets (18 et 19, 20 et 21) à sens d'enroulement contraires, de manière à déplacer les aliments de leurs extrémités avant et arrière vers le milieu de la cuve (5). Ces filets (18 à 21) peuvent être remplacés par des pales orientées de la même manière. Chaque vis (16 ou 17) peut également ne posséder qu'un seul filet. Ces filets (18 à 21) sont avantageusement équipés à leur périphérie de couteaux ou de pièces analogues qui assurent la coupe des aliments. Le plancher (6) et/ou les parois latérales (7 et 8) de la cuve (5) peuvent porter des contre-couteaux qui favorisent ladite coupe.

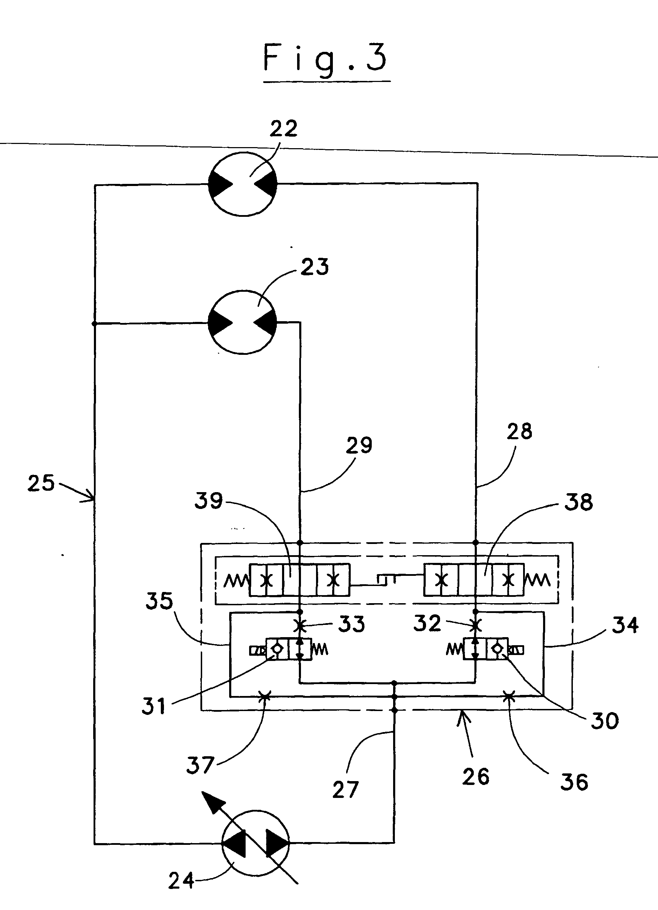

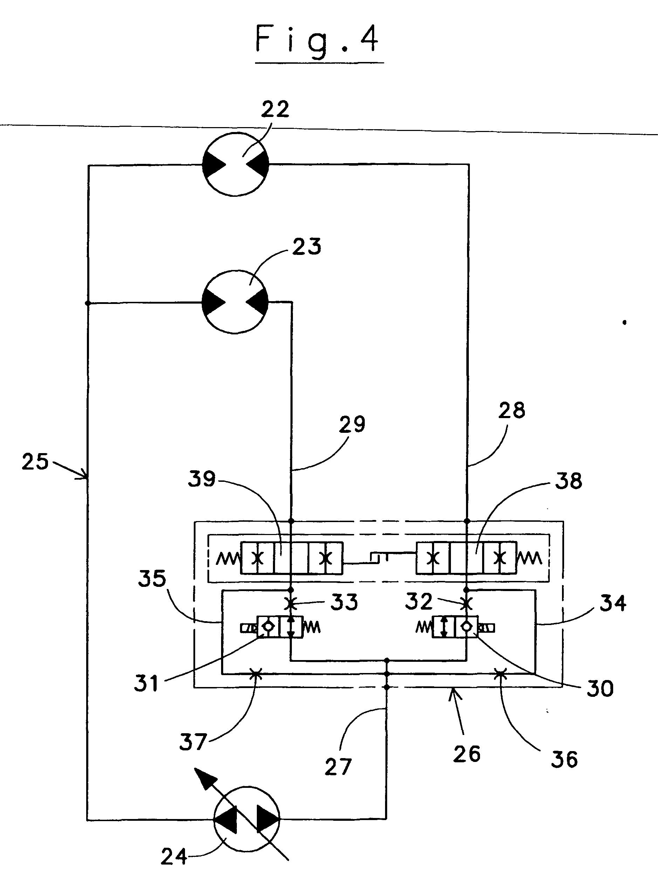

Les deux vis (16 et 17) peuvent être entraînées en rotation à des vitesses modulables en fonction des opérations. Cet entraînement est assuré au moyen de moteurs hydrauliques (22 et 23) situés sur la paroi avant (9). Comme cela ressort des figures 3 et 4, ces moteurs (22 et 23) sont alimentés à partir d'une pompe (24) par l'intermédiaire d'un circuit hydraulique (25) comprenant un diviseur de débit réglable (26). Ce dernier comporte un conduit d'arrivée (27) qui se divise en deux conduits (28 et 29) menant chacun à un des moteurs hydrauliques (22 et 23). Sur chacun de ces conduits (28 et 29) est prévue une valve réglable (30 et 31) avec une position ouverte et une position fermée. La commande de ces valves (30 et 31) qui peut être électrique est avantageusement jumelée avec la commande des trappes de distribution (11 et 12). A proximité de ces valves (30 et 31) sont également prévus des régulateurs de débit (32 et 33). Deux autres conduits (34 et 35), avec chacun un régulateur de débit (36 et 37), relient directement le conduit d'arrivée (27) aux deux conduits (28 et 29) en contournant les valves (30 et 31). Enfin, sur ces conduits (28 et 29) qui mènent aux moteurs hydrauliques (22 et 23) est prévue une balance d'équilibrage de pression (38, 39).

Lors du mélange et du mixage des aliments dans la cuve (5), les deux moteurs hydrauliques (22 et 23) sont entraînés à des vitesses de rotation nominales sensiblement égales. Pour ce travail, les trappes de distribution (11 et 12) sont fermées et les valves (30 et 31) du diviseur de débit (26) sont en position ouverte (figure 3) de telle sorte qu'environ 50 % du débit total passe par chacun des conduits (28 et 29). Des quantités d'huile sensiblement identiques arrivent alors aux moteurs (22 et 23) en passant à la fois par les valves (30 et 31) et les conduits de contournement (34 et 35).

Pour la distribution des aliments, une des trappes (11 et 12) dans les parois latérales (7 et 8) est ouverte pour permettre la sortie des aliments par exemple dans une auge. Cette ouverture commande alors la fermeture de la valve (30 ou 31) du conduit (28 ou 29) qui mène au moteur d'entraînement (22 ou 23) de la vis (16 ou 17) qui est située du côté de la paroi latérale (7 ou 8) avec la trappe (11 ou 12) fermée. Une quantité d'huile plus importante passe alors par le conduit (28 ou 29) avec la valve (30 ou 31) ouverte (voir figure 4). Le rapport de division du débit de l'huile peut par exemple être tel que le débit passant par le conduit (28 ou 29) avec la valve (30 ou 31) ouverte monte à 80 % du débit total et que celui passant par le conduit (28 ou 29) avec la valve (30 ou 31) fermée baisse à 20 % du débit total. Cet agencement provoque une augmentation d'environ 60 % de la vitesse de rotation du moteur (22 ou 23) de la vis (16 ou 17) qui est près de la trappe (11 ou 12) ouverte et une diminution d'environ 60 % de la vitesse de rotation du moteur de l'autre vis.

La vis (16 ou 17) qui se situe du côté de la paroi latérale (7 ou 8) où la trappe (11 ou 12) est ouverte tourne alors plus vite et accélère la sortie des aliments de la cuve (5). Elle permet ainsi une distribution plus rapide. Inversement, la deuxième vis (16 ou 17) ralentit le brassage des aliments qui conservent leur structure.

Dans le cas d'un entraînement mécanique des deux vis (16 et 17) l'actionnement de celles-ci s'effectue au moyen d'un boîtier avec des pignons déplaçables ou interchangeables. La vitesse de rotation des vis (16 et 17) peut ainsi être augmentée ou diminuée pour la distribution ou le mélange des aliments en faisant engrener des pignons de différents diamètres.

Il est bien évident que l'invention n'est pas limitée aux modes de réalisation décrits ci-dessus. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine de préparation et de distribution d'aliments pour le bétail, comprenant un châssis (1), une cuve (5) qui est montée sur ledit châssis (1) et qui est formée par un plancher (6), deux parois latérales (7 et 8), une paroi avant (9) et une paroi arrière (10) définissant un volume pouvant être rempli d'aliments, au moins une trappe (11, 12) pour la distribution sur au moins une paroi latérale (7, 8), des moyens de déchiquetage et de mixage (15) qui se situent dans le fond de la cuve (5), lesquels moyens (15) sont constitués par au moins deux vis (16, 17) placées côte à côte qui sont entraînées en rotation à des vitesses modulables et qui sont munies de filets (18 à 21) ou de pales qui déplacent les aliments dans la cuve (5) en vue d'obtenir un mélange homogène ou de les en faire sortir pour la distribution lorsqu'une trappe (11, 12) est ouverte, ***caractérisée par le fait* qu'**elle comporte des moyens d'entraînement en rotation des vis (16 et 17) qui assurent des vitesses de rotation des vis (16 et 17) qui sont sensiblement égales lorsque la trappe (11,12) est fermée et qui assurent une augmentation de la vitesse de rotation de la vis (16 ou 17) qui est située du même côté que la trappe (11, 12) ouverte et une réduction de la vitesse de rotation de l'autre vis (16 ou 17).

2. Machine selon la revendication **1, *caractérisée par le fait* que** les vis (16 et 17) sont entraînées en rotation par des moteurs hydrauliques (22, 23) alimentés depuis une pompe (24) par l'intermédiaire d'un circuit hydraulique (25) comprenant un diviseur de débit réglable (26) et deux valves (30 et 31) de variation de la vitesse de rotation des moteurs hydrauliques (22 et 23).

3. Machine selon la revendication 2, ***caractérisée par le fait* que** le diviseur de débit (26) comporte une balance d'équilibrage de pression (38, 39).

4. Machine selon la revendication 2, ***caractérisée par le fait* que** les valves (30 et 31) sont commandées par l'ouverture et la fermeture des trappes (11 et 12).

5. Machine selon la revendication 1, ***caractérisée par le fait* que** les vis (16 et 17) sont entraînées en rotation mécaniquement au moyen d'un boîtier avec des pignons déplaçables ou interchangeables en vue de modifier la vitesse de rotation de l'une des vis (16 et 17) par rapport à l'autre.

## Patentansprüche

1. Maschine zur Zubereitung und Verteilung von Viehfutter, mit einem Gestell (1), einer Wanne (5), die auf dem Gestell (1) befestigt und von einem Boden (6), zwei Seitenwänden (7 und 8), einer Vorderwand (9) und einer Rückwand (10) gebildet ist, die ein Volumen definieren, das mit Futter gefüllt werden kann, mindestens einer Klappe (11, 12) für die Verteilung auf mindestens einer Seitenwand (7, 8), Mittel (15) zum Zerkleinern und Mischen, die sich am Boden der Wanne (5) befinden, wobei die Mittel (15) von mindestens zwei Schrauben (16, 17) gebildet sind, die Seite an Seite angeordnet und in Drehung mit modulierbaren Geschwindigkeiten angetrieben werden und mit Gewinden (18 bis 21) oder Schraubenblättern versehen sind, die das Futter in der Wanne (5) weiterbewegen, um eine homogene Mischung zu erhalten oder um es zum Verteilen auszuleiten, wenn eine Klappe (11, 12) offen ist, ***dadurch gekennzeichnet,* dass** sie Drehantriebsmittel für die Schrauben (16 und 17) umfasst, die Drehgeschwindigkeiten der Schrauben (16 und 17) gewährleisten, die im Wesentlichen gleich sind, wenn die Klappe (11, 12) geschlossen ist, und die eine Erhöhung der Drehgeschwindigkeit der Schraube (16 oder 17), die sich auf derselben Seite wie die offene Klappe (11, 12) befindet, und eine Verringerung der Drehgeschwindigkeit der anderen Schraube (16 oder 17) gewährleisten.

2. Maschine nach Anspruch 1, ***dadurch gekennzeichnet,* dass** die Schrauben (16 und 17) in Drehung von Hydraulikmotoren (22, 23) angetrieben werden, die von einer Pumpe (24) über einen Hydraulikkreis (25) gespeist werden, der einen einstellbaren Mengenteiler (26) und zwei Ventile (30 und 31) zur Veränderung der Drehgeschwindigkeit der Hydraulikmotoren (22, 23) umfasst.

3. Maschine nach Anspruch 2, ***dadurch gekennzeichnet,* dass** der Mengenteiler (26) eine Druckausgleichsvorrichtung (38, 39) umfasst.

4. Maschine nach Anspruch 2, ***dadurch gekennzeichnet,* dass** die Ventile (30 und 31) durch das Öffnen und Schließen der Klappen (11 und 12) gesteuert werden.

5. Maschine nach Anspruch 1, ***dadurch gekennzeichnet,* dass** die Schrauben (16 und 17) mechanisch in Drehung angetrieben werden, mit Hilfe eines Gehäuses mit verschiebbaren oder austauschbaren Ritzeln, um die Drehgeschwindigkeit einer der Schrauben (16 und 17) in Bezug auf die andere zu verändern.

## Claims

1. Machine for preparing and distributing cattle feed including a chassis (1), a tank (5) which is mounted on said chassis (1) and which is formed of a floor (6), two side walls (7 and 8), a front wall (9) and a rear wall (10) defining a volume that can be filled with feed, at least one flap (11, 12) for the distribution on at least one side wall (7, 8), shredding and mixing means (15) which are located in the bottom of the tank (5), which means (15) consist of at least two screws (16, 17) arranged side by side, which are driven in rotation at modifiable speeds and which are provided with threads (18 to 21) or blades which move the feed along inside the tank (5) with a view to homogeneously mixing it or delivering it for distribution when a flap (11, 12) is open, ***characterized in* that** it comprises means for driving the screws (16 and 17) in rotation, which provide the screws (16 and 17) with rotational speeds which are substantially equal when the flap (11, 12) is closed and ensure an increase of the rotational speed of the screw (16 or 17) which is located on the same side as the open flap (11, 12) and a reduction of the rotational speed of the other screw (16 or 17).

2. Machine as claimed in claim 1, ***characterized in* that** the screws (16 and 17) are driven in rotation by hydraulic motors (22, 23) powered from a pump (24) via a hydraulic circuit (25) including an adjustable flow divider (26) and two valves (30 and 31) making it possible to vary the rotational speed of the hydraulic motors (22 and 23).

3. Machine as claimed in claim 2, ***characterized in* that** the flow divider (26) has a pressure equilibrium balance (38,39).

4. Machine as claimed in claim 2, ***characterized in* that** the valves (30 and 31) are controlled by the opening and closure of the flaps (11 and 12).

5. Machine as claimed in claim 1, ***characterized in* that** the screws (16 and 17) are driven in rotation mechanically by means of a box containing gears that can be shifted or interchanged with a view to altering the rotational speed of one of the screws (16 and 17) with respect to the other.
